# EUROPÄISCHE PATENTSCHRIFT

(11) **EP 2 545 275 B1**
(45) Veröffentlichungstag und Bekanntmachung des Hinweises auf die Patenterteilung: **17.08.2016**
(21) Anmeldenummer: 11707143.1
(22) Anmeldetag: 24.02.2011
(51) Int. Cl.: F03D 7/02, F03D 80/00

(54) **REDUNDANTES PITCHSYSTEM**
REDUNDANT PITCH SYSTEM
SYSTÈME DE PAS REDONDANT

(30) Priorität: 10.03.2010 DE 102010010958
(43) Veröffentlichungstag der Anmeldung: 16.01.2013
(73) Patentinhaber: SSB Wind Systems GmbH & Co. KG, 48499 Salzbergen (DE)
(72) Erfinder: BERTOLOTTI, Fabio, 48455 Bad Bentheim (DE); KESTERMANN, Hermann, 48432 Rheine (DE); VAN SCHELVE, Jens, D- 28195 Bremen (DE)
(86) Internationale Anmeldenummer: PCT/EP2011/052726
(87) Internationale Veröffentlichungsnummer: WO 2011/110429

(56) Entgegenhaltungen:
- EP-A1- 0 858 148
- EP-A2- 1 903 213
- WO-A1-2005/021962
- WO-A1-2006/069573
- WO-A1-2009/008863
- WO-A2-2010/030338
- DE-B1- 2 010 431
- DE-U1- 20 020 232
- JP-A- 2006 077 657
- US-A1- 2009 134 624

## Beschreibung

Die Erfindung betrifft eine Windkraftanlage gemäß Anspruch 1.

Moderne Windkraftanlagen umfassen drehbar an einem Rotor gelagerte Rotorblätter, die durch eine individuelle Änderung des Blattwinkels den Anströmwinkel des Windes relativ für jedes Rotorblatt variieren können (Pitchsystem). Neben der energieeffizienten Einstellung der Rotorblätter zur optimalen Umwandlung von kinetischer in elektrische Energie hat ein solches Pitchsystem auch eine Sicherheitsfunktion, denn eine sofortige Einstellung der Rotorblätter in die Park- oder Fahnenstellung ermöglicht die Vermeidung von unzulässigen Rotationsbewegungen des Rotors oder die unzulässige

Überschreitung von Festigkeitswerten der gesamten Anlage. Bei Extremwetterlagen mit starken Böen ist das Pitchsystem somit die am schnellsten wirkende Bremse der Anlage. Aus diesem Grunde werden an die Zuverlässigkeit des Pitchsystems hohe Anforderungen gestellt. Nach den einschlägigen Vorschriften und Richtlinien von staatlichen oder privat organisierten Überwachungsorganisationen für die Sicherheit von Windkraftanlagen muss die Verfügbarkeit einer Windkraftanlage auch bei Ausfall oder Teilausfall von Komponenten des Pitchsystems garantiert werden.

Bei Windkraftanlagen mit drei Rotorblättern und jedem Rotorblatt individuell zugeordnetem Pitchsystem können bei Ausfall eines Pitchsystems die jeweils anderen beiden Pitchsysteme eine ausreichende Redundanz sicherstellen. Problematisch wird dies jedoch bei nur zwei Rotorblättern, bei denen bei Ausfall eines Pitchsystems nur noch ein anderes Pitchsystem die Sicherheitsfunktion ausfüllen muss. Dies wird als nicht ausreichend für eine Redundanz erachtet.

DE 603 11 896 T2 zeigt gattungsbildend ein redundantes Pitchsystem mit wenigstens zwei Umrichtern, die als Leistungssteuereinheit zum Steuern des Pitchsystems vorgesehen sind. Jedem Antrieb ist jeweils nur ein Umrichter zugeordnet. Bei Ausfall eines Pitchsystems wird über eine Schalteinrichtung der zweite Umrichter in Funktion gesetzt.

DE 101 16 011 A1 zeigt eine Windenergieanlage mit einem redundanten Pitchsystem. Das System weist mehr als einen Antrieb (Motor) für ein Rotorblatt auf, wobei über eine Schaltvorrichtung bei Ausfall eines Antriebes der zweite Antrieb hinzugeschaltet werden kann.

Eines der empfindlichsten Komponenten des Pitchsystems ist die sogenannte Drehdurchführung oder Schleifringanordnung, bei der Energie- und Steuerdaten von dem rotierenden Teil der Anlage zu dem feststehenden Teil und umgekehrt übertragen werden.

Eine Drehdurchführung zur Stromübertragung bei Windkraftanlagen ist beispielsweise in DE 201 16 756 U1 offenbart. Die bekannte Anordnung besteht aus einem zweiteiligen Ringgehäuse, in dem ein oder mehrere zusammengesetzte, wiederholt öffnende und sich radial drehbare Isoliergehäuse gelagert sind, die ineinander eingreifen und zueinander isoliert sind. In dem Isoliergehäuse sind ferner zwei Schleifringe gegeneinander drehbar gelagert. Die beiden Isoliergehäuse sind zusammen mit Federn auf einer inneren, als Lagerachse dienenden Hülse gelagert und axial in einer äußeren Hülse dieses Ringgehäuses arretiert. Die beiden Hülsen des tragenden Ringgehäuses werden axial ineinander verschoben und arretiert und um 360° gedreht. Die Isoliergehäuse werden dabei mit Schleifringen und die Federn zwischen den beiden Hülsen des tragenden Ringgehäuses lösbar und axial federnd zusammengepresst.

Allgemein sind Drehdurchführungen oder Schleifringanordnungen sehr starken elektrischen und mechanischen Beanspruchungen ausgesetzt. Bei Ausfall oder Störung dieser Komponente ist die Sicherheitsfunktion des Pitchsystems funktionslos, insbesondere für die Teile des Systems, die im rotierenden Teil der Anlage angeordnet sind. Dies betrifft den Antriebsmotor und die Teile des Umrichters, die im rotierenden Teil angeordnet sind.

DE 197 52 241 C2 zeigt einen Generator zur Speisung von Verbrauchern in einem Bordnetz eines Fahrzeuges. Der Generator weist eine zweidrähtige Statorwicklung für Drehstrom, zwei galvanisch getrennte Statorwicklungen und eine Erregerwicklung mit einem Regler auf. Die Erregerwicklung, der parallel zum ersten Regler ein weiterer Regler zugeordnet ist, wird über jeweils ein eigenes Bürstenpaar von unabhängig voneinander arbeitenden Schleifringen gespeist.

Die DE 200 20 232 U1 offenbart eine Windkraftanlage mit Mitteln zur Verstellung der Rotorblätter um eine Längsachse, die an einer Nabe einer Rotorwelle angeordnet sind, welche mindestens einen Stellantrieb mit mindestens einen Stellmotor zur Verstellung zumindest eines Rotorblatts, mindestens einen Hilfsgenerator zur Auskopplung von elektrischer Energie aus der kinetischen Energie zumindest der Rotorwelle, eine Störfallerkennungseinrichtung, welche bei Erfassung eines Fehlerfalles der Windkraftanlage aktiv wird, und eine Umschalteinrichtung aufweisen, welche bei Aktivierung der Störfallerkennungseinrichtung die elektrische Energie des Hilfsgenerators zumindest an einen Stellmotor zur Verstellung zumindest eines Rotorblatts in eine Fahnenstellung leitet. Es sind zwei Sätze von Schleifringen vorgesehen, wobei eine Netzeinspeisung mit Umrichtern/Wechselrichtern über eine erste Verbindungsleitung verbunden ist, die über einen ersten der Schleifringsätze läuft. Die Störfallerkennungseinrichtung ist mit der Umschalteinrichtung über eine zweite Verbindungsleitung verbunden, die ebenfalls über den ersten Schleifringsatz läuft. Ferner ist der Hilfsgenerator mit der Umschalteinrichtung über eine dritte Verbindungsleitung verbunden, die über den zweiten Schleifringsatz läuft.

Die WO 2005/021962 A1 beschreibt ein Rotorblattverstellsystem für eine Windkraftanlage, mit wenigstens einem Rotorblattverstellantrieb zum Ändern eines Rotorblattanstellwinkels, wenigstens zwei Leistungssteuermodulen zum Steuern des Rotorblattverstellantriebs, um den Rotorblattanstellwinkel einzustellen, und wenigstens eine Schalteinheit zum Verbinden des Rotorblattverstellantriebs mit jedem der beiden Leistungssteuermodule. Die Leistungssteuermodule werden über eine einzige Schleifringanordnung versorgt.

Die WO 2006/069573 A1 offenbart eine Windkraftanlage mit gesteuerten Einrichtungen und einem Steuerungssystem für eine oder mehrere dieser Hauptkomponenten, wobei das Steuerungssystem durch das Vorsehen wenigstens eines weiteren Steuerungssystems zum Steuern derselben gesteuerten Einrichtungen mehrfach vorgesehen ist.

Die DE 20 10 431 A1 beschreibt einen motorischen Stellantrieb für Ventile mit schubkraftabhängiger Endstellungsabschaltung, bei dem eine mit dem Verschlussstück gekuppelte unverdrehbar geführte Gewindespindel durch eine zugeordnete motorisch verdrehbare Spindelmutter axial bewegbar ist.

Die EP 0 858 148 A1 offenbart eine Schleifring-Asynchronmaschine, bei welcher die Schleifkontakte magnetisch betätigt werden können.

Die WO 2009/008863 A1 beschreibt eine Windkraftanlage mit einer drehbaren Nabe, wenigstens einem drehbar an der Nabe gelagerten Rotorblatt, einem in der Nabe angeordneten Blattwinkelsteuerungssystem zum Einstellen des Anstellwinkels jedes Rotorblatts, einer feststehenden Gondel, einer für die Übertragung von elektrischen Signalen zwischen in der Nabe angeordneten Einrichtungen und in der Gondel angeordneten Einrichtungen vorgesehenen Schleifringanordnung, die an einem Übergang eines elektrischen Kreises zwischen der Nabe und der Gondel vorgesehen ist, und einer Vorrichtung für den Weiterbetrieb des Blattwinkelsteuerungssystems während eines Netzausfalls, wobei Mittel zum Erfassen und Überwachen der Spannungsversorgung auf der drehenden Seite der Schleifringanordnung vorgesehen sind und wobei ferner Mittel zur Spannungsversorgung des Blattwinkelsteuerungssystems aus einer Notstromversorgung vorgesehen sind, wenn die erfasste Spannung unter einen vorgegebenen Schwellenwert fällt. Es werden insgesamt zwei Schleifringanordnungen offenbart, wobei eine erste der Schleifringanordnungen zur Übertragung von Leistung und die zweite Schleifringanordnung zur Übertragung von Steuerdaten dient.

Der Stand der Technik bei redundanten Pitchsystemen für Windkraftanlagen bietet bezüglich eines Ausfalls der Drehdurchführung oder der Schleifringeinheit keine ausreichende Funktionssicherheit. Es ist daher eine Aufgabe der Erfindung, ein redundantes Pitchsystem bereitzustellen, das auch bezüglich einer Störung der Drehdurchführung eine ausreichende Funktionssicherheit des Systems bietet.

Diese Aufgabe wird erfindungsgemäß durch eine Windkraftanlage ein nach Anspruch 1 gelöst. Vorteilhafte Weiterbildungen der Erfindung ergeben sich aus den Unteransprüchen.

Erfindungsgemäß wird somit eine Windkraftanlage gemäß Anspruch 1 geschaffen, u. a. umfassend wenigstens einen jedem Rotorblatt der Anlage zugeordneten elektrisch angetriebenen Pitchantrieb mit mindestens einem in einem rotierenden Teil der Anlage angeordneten Elektromotor zur Blattverstellung und einer dem Motor zugeordneten Leistungs- und Steuereinheit mit Leitungsverbindungen, mit denen Energie- und Steuerdaten von der Leistungs- und Steuereinheit zum Motor und umgekehrt übertragbar sind, wobei die Leitungsverbindungen über eine Drehdurchführung geführt sind, die an einer Verbindungsstelle zwischen dem rotierenden Teil und einem axial anschließenden feststehenden Bereich angeordnet ist, und wobei das System eine zur ersten Drehdurchführung redundante und mechanisch und elektrisch von der ersten Drehdurchführung getrennt arbeitende, weitere Drehdurchführung aufweist, die mit der Leistungs- und Steuereinheit und dem Motor verbunden ist oder verbunden werden kann, um so bei Ausfall der ersten Drehdurchführung eine sichere Übertragung der Energie- und Steuerdaten aufrecht zu erhalten.

Der rotierende Teil ist insbesondere durch einen Rotor und/oder eine Rotorwelle der Windkraftanlage gebildet. Der feststehende Bereich, der hier auch Stator genannt wird, ist z.B. durch ein Maschinenhaus und/oder einen Maschinenträger der Windkraftanlage gebildet. Der rotierende Teil ist insbesondere in bzw. an dem feststehenden Bereich drehbar gelagert.

Die Idee der Erfindung liegt darin, die Redundanz des Systems auch auf die Drehdurchführung als empfindlichste Komponente des Pitchsystems auszuweiten. Damit erstreckt sich die Redundanz nicht nur auf die rotierenden Teile des Pitchsystems, sondern auch auf im Stator angeordnete, weitere Komponenten. Nach dem Stand der Technik wäre hierfür eine weitere redundante Komponente erforderlich.

Das erfindungsgemäße redundante Pitchsystem weist demgemäß eine mechanisch und elektrisch von der ersten Drehdurchführung getrennt arbeitende, weitere Drehdurchführung auf, die mit der Leistungs- und Steuereinheit und dem Motor verbunden ist. Bei Ausfall der ersten Drehdurchführung wird somit eine sichere Übertragung der Energie- und Steuerdaten über die zweite Drehdurchführung aufrechterhalten. Die Anlage kann somit erst einmal weiterbetrieben werden, wobei die funktionsgestörte Drehdurchführung beim nächsten anstehenden Wartungszyklus der Windkraftanlage ausgewechselt oder wieder instand gesetzt werden kann.

Auch ein sicheres Abschalten der Anlage ist garantiert, da durch die beiden Drehdurchführungen jederzeit der Energie-und Steuerfluss vom Antrieb zur Leistungs- und Steuereinheit sichergestellt wird. Damit ist auch sichergestellt, dass ein Notabschaltvorgang eingeleitet werden kann, indem durch den Antrieb die Verstellung eines mit dem Antrieb verknüpften Rotorblattes in die Fahnen- oder Parkstellung gedreht werden kann.

In einer vorteilhaften Ausführung ist vorgesehen, dass die Leitungsverbindungen zwischen dem Motor und der Leistungs-und Steuereinheit über mechanisch und elektrisch getrennte Leitungsführungen erfolgen. Dies ist insbesondere im Bereich der beiden Drehdurchführungen von Vorteil. Durch diese Anordnung wird sichergestellt, dass ein elektrischer Kurzschluss oder eine mechanische Beschädigung durch Brand oder Hitze in einer der Leitungsführungen sich nicht auf die andere Leitungsführung auswirkt.

Die beiden Drehdurchführungen sind axial hintereinander in Reihe und im Abstand zueinander angeordnet, wobei bei dieser Anordnung die erste Drehdurchführung im Bereich der dem Rotorblatt zugewandten Stirnseite des rotierenden Teils angeordnet ist und die zweite Drehdurchführung an der gegenüberliegenden Stirnseite angeordnet ist.

Es ist aufgrund beengter Platzverhältnisse in dem Maschinenhaus oben vorteilhaft, beide Drehdurchführungen axial hintereinander benachbart anzuordnen. Sie können dann vorteilhaft von einem gemeinsamen Gehäuse umschlossen sein. Dieses Gehäuse ist so gestaltet, dass es gegen Schmutz und Feuchtigkeit abgedichtet ist.

Die beiden redundanten Drehdurchführungen sind üblicherweise als zwei gleichartig aufgebaute Schleifringeinheiten ausgeführt, wobei jede Einheit ein Einzelgehäuse, Schleifringe und auf die Ringe aufdrückbare Kontaktarme zur Übertragung der Energie- und Steuerdaten umfasst.

Die Aufdrückkraft der Kontaktarme einer oder beider Schleifringeinheiten kann vorteilhaft über eine Druckreduktionseinrichtung auf die Schleifringe einstellbar gemacht werden. Die verwendete Druckreduktionseinrichtung umfasst magnetische / elektromagnetische Einrichtungen, die bei Fehlen eines Energie- und/oder Steuersignals einen Kontakt bildenden bzw. Kontakt unterbrechenden Anpressdruck herstellen. Die Schleifringe sind daher in einer Art "Standby-Modus", sobald der Magnet oder die magnetische Einrichtung aktiviert ist. Die Kontaktarme werden beispielsweise durch Magnetkraft aus der Kontaktstellung herausbewegt, um den Druck zwischen den Kontaktarmen und den Schleifringen zu reduzieren. Durch diese Reduktion bis hin zum Lösen des Kontaktdruckes wird die Lebensdauer der Schleifringeinheit verlängert. Unter reduziertem Anpressdruck können die Schleifringe allerdings nicht mehr den vollen Stromfluss übertragen.

Bei normaler Funktion ist bei der Druckreduktion jeweils nur eine Schleifringeinheit inaktiv. Die weitere Schleifringeinheit ist dabei voll aktiv. Aus Sicherheitsgründen ist es darüber hinaus vorteilhaft, die magnetischen oder elektromagnetischen Einrichtungen so auszulegen, dass bei einem Spannungs- oder Magnetisierungsabfall über eine Rückstelleinrichtung, z.B. in Form einer Rückstellfeder, die Kontaktarme zurück auf einen vollen Anpressdruck gedrückt werden.

Zur Sicherstellung einer redundanten Leitungsverbindung ist die erste Drehdurchführung auf einer ersten Hülse und die zweite Drehdurchführung auf einer weiteren Hülse gelagert, wobei letztere koaxial zu der ersten angeordnet ist. Vorteilhaft erfolgt der Leitungszugang bzw. -abgang der ersten Drehdurchführung in dem durch die Durchmesserdifferenz gebildeten, radial sich erstreckenden äußeren Ringraum erfolgt und der andere Zu- bzw. Abgang im radialen Innenraum der eingeschobenen und/oder inneren Hülse vorgesehen ist.

Zur weiteren Erhöhung der Redundanz des Systems kann vorteilhaft der Umrichter eine unterbrechungsfreie Spannungs-und Stromversorgung (USV) aufweisen. Eine solche Vorrichtung ist beispielsweise aus der US 6 921 985 B2 bekannt.

Als Elektromotor kommen als Antrieb sowohl Gleichstrommotoren, Wechselstrommotoren als auch Drehstrommotoren in Frage.

In einer ersten vorteilhaften Anordnung ist im rotierenden Teil der Windkraftanlage nur der Elektromotor des Pitchantriebes angeordnet, und die zugehörige Leistungs- und Steuereinheit mit anderen Komponenten ist im feststehenden Bereich angeordnet, wobei über eine Schalteinrichtung die zughörige Leistungs- und Steuereinheit mit einer von beiden Drehdurchführungen verbunden ist. Im feststehenden Bereich können vorteilhaft die dem Motor zugeordneten Komponenten des Umrichters mit einer mit einer unabhängigen Energiequelle (Batterie, Kondensator) verbundenen Notstromversorgungseinrichtung versehen werden, die im Störungsfall der Leistungs- und Steuereinheit, insbesondere bei Unterbrechung der Stromzuführung der Leistungs- und Steuereinheit, die Stromversorgung über die redundanten Schleifringeinheiten aufrecht erhält.

Bei der Verwendung von Gleichstrommotoren werden zwei Leitungsverbindungen zur Führung des Gleichstromes benötigt, das gleiche gilt für Wechselstrom. Bei Drehstrommotoren werden drei Leitungsverbindungen benötigt.

Bevorzugt umfasst das Pitchsystem einen oder wenigstens einen Umrichter, der die Leistungs- und Steuereinheit aufweist oder bildet. Beispielsweise ist die Leistungs- und Steuereinheit als Umrichter ausgebildet.

Gemäß einer Weiterbildung der Erfindung umfasst das Pitchsystem mehrere Umrichter, die jeweils eine Leistungs-und Steuereinheit aufweisen oder bilden. Beispielsweise sind die Leistungs- und Steuereinheiten jeweils als Umrichter ausgebildet.

Der oder jeder der Umrichter umfasst als Komponenten insbesondere einen Gleichrichter, eine Leistungssteuereinheit und vorzugsweise auch noch andere Komponenten. Vorteilhaft ist der oder jeder der Umrichter mit der oder mit einer Notstromversorgungseinrichtung versehen und/oder mit dieser elektrisch verbunden.

In einer alternativen Ausführung ist die Anordnung der Komponenten des Umrichters sowohl im rotierenden Teil als auch im feststehenden Bereich angeordnet. Bei dieser "gesplitteten" Anordnung des Umrichters ist die Leistungssteuereinheit des Umrichters direkt am Motor, also im rotierenden Teil angeordnet, der Gleichrichter und die anderen Komponenten des Umrichters sowie die Notstromversorgungseinrichtung sind hingegen im feststehenden Bereich angeordnet. Diese Anordnung ist insbesondere bei Gleichstrommotoren als Antrieb vorteilhaft. Damit kann die Anzahl der Leitungsverbindungen und Schleifringeinheiten minimal ausgelegt werden. Es werden jeweils nur zwei Leitungen für einen Motor benötigt. Die gesplittete Anordnung ist darüber hinaus auch bei Wechselstrom- oder Drehstrommotoren bei entsprechender Anpassung der Umrichter bzw. Gleichrichter anwendbar.

Zur weiteren Erhöhung der Redundanz des Systems kann vorteilhaft jeder Leistungs- und Steuereinheit mindestens eine weitere Leistungs- und Steuereinheit zugeordnet werden, die bei Ausfall der ersten Leistungs- und Steuereinheit schaltbar mit dem zugehörigen Motor der ersten Leistungs- und Steuereinheit verbunden ist. So können beispielsweise bei drei Motoren drei Leistungs- und Steuereinheiten vorgesehen sein, deren Leitungsverbindungen über die erste Drehdurchführung geführt sind, und weitere drei unabhängig arbeitende Leistungs- und Steuereinheiten vorgesehen sein, deren Leitungsverbindungen über die zweite Drehdurchführung geführt und schaltbar mit jedem der drei Motoren verbunden sind. Die Leistungs- und Steuereinheiten sind bevorzugt jeweils als Umrichter ausgebildet.

Gemäß einer Weiterbeildung weist die Windkraftanlage mehrere, insbesondere zwei oder drei Rotorblätter auf. In diesem Fall umfasst das erfindungsgemäße Pitchsystem bevorzugt mehrere elektrisch angetriebene Pitchantriebe, die insbesondere jeweils einem der Rotorblätter zugeordnet sind. Jeder der Pitchantriebe weist vorteilhaft mindestens einen in dem rotierenden Teil der Anlage angeordneten Elektromotor zur Blattverstellung und eine dem Motor zugeordnete Leistungs-und Steuereinheit mit Leitungsverbindungen zur Übertragung von Energie- und Steuerdaten von der Leistungs- und Steuereinheit zum Motor und umgekehrt auf. Die Leitungsverbindungen jedes Pitchantriebs sind über die eine (erste) Drehdurchführung geführt. Ferner ist die weitere Drehdurchführung mit jeder Leistungs- und Steuereinheit und jedem Motor verbunden oder verbindbar, um so bei Ausfall der ersten Drehdurchführung eine sichere Übertragung der Energieund Steuerdaten jedes Pitchantriebs aufrecht zu erhalten.

Die Erfindung betrifft ferner eine Windkraftanlage mit mindestens zwei Rotorblättern und einem erfindungsgemäßen Pitchsystem. Dieses Pitchsystem kann gemäß allen erläuterten Ausgestaltungen weitergebildet sein.

Mehrere Ausführungsbeispiele der Erfindung sind nachfolgend in der Zeichnung dargestellt.
Fig. 1a bis 1e zeigen in einer schematischen Darstellung verschiedene Ausführungsformen der Erfindung.
Fig. 2 zeigt in einem Längsschnitt eine erste Ausgestaltung der beiden Schleifringeinheiten ohne eine Druckreduktionseinrichtung.
Fig. 3 zeigt in einem Längsschnitt eine zweite Ausgestaltung der beiden Schleifringeinheiten mit einer magnetisch betätigten Druckreduktionseinrichtung im nicht betätigten Zustand.
Fig. 4 zeigt die Anordnung nach Fig. 3 im betätigten Zustand der Druckreduktionseinrichtung.
Fig. 5 zeigt eine schematische Ansicht einer Windkraftanlage mit einem erfindungsgemäßen Pitchsystem.
Fig. 6 zeigt eine schematische Ansicht eines Umrichters.

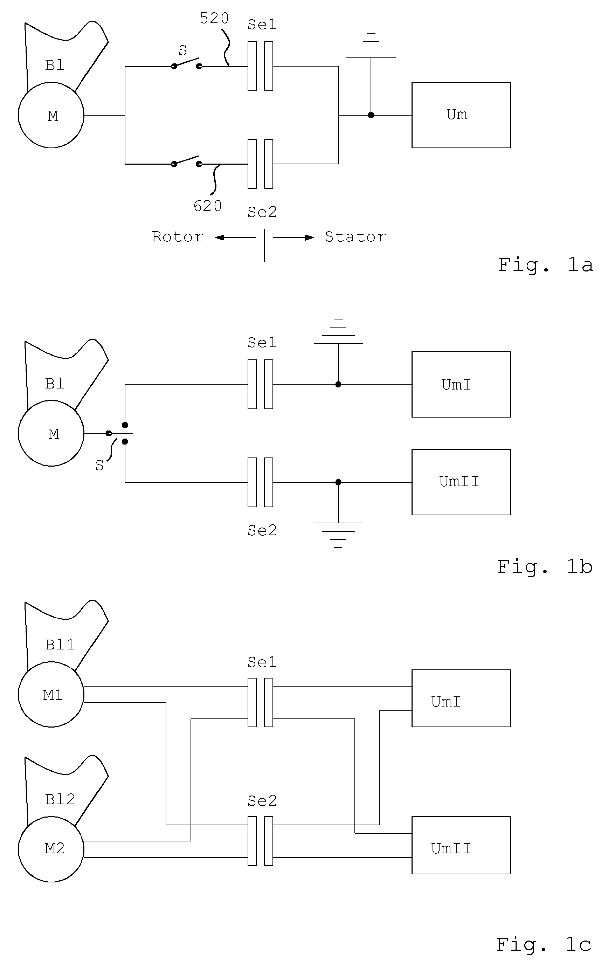

Aus Fig. 1a ist ein Pitchantrieb eines Pitchsystems gemäß einer ersten Ausführungsform der Erfindung ersichtlich, wobei ein mechanisch mit einem Rotorblatt Bl gekoppelter Elektromotor M über eine erste Reihenschaltung aus einem Schalter S und einer ersten Drehdurchführung Se1 elektrisch mit einem Umrichter Um verbindbar ist. Der Elektromotor M ist ferner über eine zweite Reihenschaltung aus einem Schalter und einer zweiten Drehdurchführung Se2 elektrisch mit dem Umrichter Um verbindbar, wobei die zweite Reihenschaltung der ersten Reihenschaltung parallel geschaltet ist. Mittels der Schalter kann der Elektromotor M somit wahlweise über die erste Drehdurchführung Se1 oder über die zweite Drehdurchführung Se2 elektrisch mit dem Umrichter Um verbunden werden. Die Drehdurchführungen Se1 und Se2 sind bevorzugt jeweils als Schleifringeinheit ausgebildet. Insbesondere bilden die Drehdurchführungen eine Schleifringanordnung.

Ist eine der Drehdurchführungen defekt, ist der Elektromotor M über die andere Drehdurchführung elektrisch mit dem Umrichter Um verbindbar.

Die Drehdurchführungen definieren eine mechanische Trennstelle des Pitchantriebs, sodass der Elektromotor M und die Schalter in einem rotierenden Teil der Windkraftanlage angeordnet sind und der Umrichter Um in einem feststehenden Bereich der Windkraftanlage, beispielsweise im Maschinenhaus, angeordnet ist. Das Rotorblatt Bl ist mittels des Elektromotors M um eine dem Rotorblatt zugeordnete Blattachse drehbar.

Aus Fig. 1b ist ein Pitchantrieb eines Pitchsystems gemäß einer zweiten Ausführungsform der Erfindung ersichtlich, wobei ein mechanisch mit einem Rotorblatt Bl gekoppelter Elektromotor M über einen als Umschalter ausgebildeten Schalter S wahlweise mit einer ersten Drehdurchführung Se1 oder mit einer zweiten Drehdurchführung Se2 elektrisch verbindbar ist. Die erste Drehdurchführung Se1 ist elektrisch mit einem ersten Umrichter UmI verbunden, und die zweite Drehdurchführung ist elektrisch mit einem zweiten Umrichter UmII verbunden. Mittels des Schalters S kann der Elektromotor M somit wahlweise über die erste Drehdurchführung Se1 elektrisch mit dem ersten Umrichter UmI oder über die zweite Drehdurchführung Se2 elektrisch mit dem zweiten Umrichter UmII verbunden werden. Die Drehdurchführungen Se1 und Se2 sind bevorzugt jeweils als Schleifringeinheit ausgebildet. Insbesondere bilden die Drehdurchführungen eine Schleifringanordnung.

Ist eine der Drehdurchführungen defekt, ist der Elektromotor M über die andere Drehdurchführung elektrisch mit dem dieser zugeordneten Umrichter verbindbar. Ist einer der Umrichter defekt, ist der Elektromotor M über die dem anderen Umrichter zugeordnete Drehdurchführung elektrisch mit dem anderen Umrichter verbindbar. Das Rotorblatt Bl ist mittels des Elektromotors M um eine dem Rotorblatt zugeordnete Blattachse drehbar.

Aus Fig. 1c ist ein Pitchsystem gemäß einer dritten Ausführungsform der Erfindung ersichtlich, wobei zwei Elektromotoren M1 und M2 jeweils mechanisch mit einem Rotorblatt Bl1 bzw. Bl2 gekoppelt sind. Dabei ist jedes der Rotorblätter mittels des jeweiligen Elektromotors um eine dem jeweiligen Rotorblatt zugeordnete Blattachse drehbar. Ferner sind zwei Drehdurchführungen Se1 und Se2 sowie zwei Umrichter UmI und UmII vorgesehen, wobei jeder der Elektromotoren über jede der Drehdurchführungen elektrisch mit jedem der Umrichter verbindbar ist. Der Elektromotor M1 und der Umrichter UmI sind einander zugeordnet. Ferner sind der Elektromotor M2 und der Umrichter UmII einander zugeordnet. Die Drehdurchführungen Se1 und Se2 sind bevorzugt jeweils als Schleifringeinheit ausgebildet. Insbesondere bilden die Drehdurchführungen eine Schleifringanordnung.

Ist eine der Drehdurchführungen defekt, ist jeder der Elektromotoren über die andere Drehdurchführung elektrisch mit dem jeweils zugeordneten Umrichter verbindbar. Ist einer der Umrichter defekt, ist jeder der Elektromotoren über jede der Drehdurchführungen elektrisch mit dem anderen Umrichter verbindbar. Für die Auswahl der zu verwendenden Drehdurchführung und/oder des oder der zu verwendenden Umrichter sind insbesondere geeignete Schaltelemente vorgesehen.

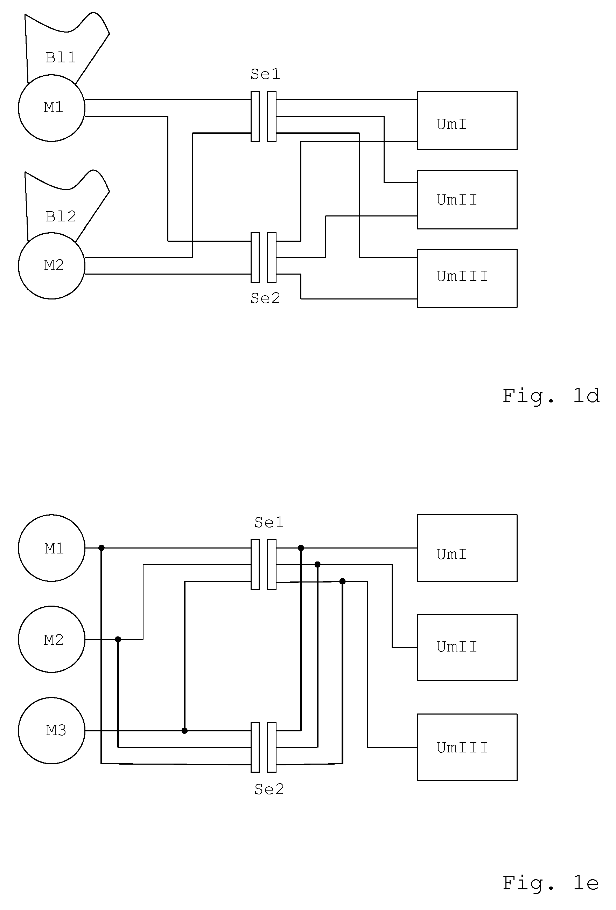

Aus Fig. 1d ist ein Pitchsystem gemäß einer vierten Ausführungsform der Erfindung ersichtlich, wobei zwei Elektromotoren M1 und M2 jeweils mechanisch mit einem Rotorblatt Bl1 bzw. Bl2 gekoppelt sind. Dabei ist jedes der Rotorblätter mittels des jeweiligen Elektromotors um eine dem jeweiligen Rotorblatt zugeordnete Blattachse drehbar. Ferner sind zwei Drehdurchführungen Se1 und Se2 sowie drei Umrichter UmI, UmII und UmIII vorgesehen, wobei jeder der Elektromotoren über jede der Drehdurchführungen elektrisch mit jedem der Umrichter verbindbar ist. Der Elektromotor M1 und der Umrichter UmI sind einander zugeordnet. Ferner sind der Elektromotor M2 und der Umrichter UmII einander zugeordnet. Der Umrichter UmIII ist zur Reserve vorgesehen. Die Drehdurchführungen Se1 und Se2 sind bevorzugt jeweils als Schleifringeinheit ausgebildet. Insbesondere bilden die Drehdurchführungen eine Schleifringanordnung.

Ist eine der Drehdurchführungen defekt, ist jeder der Elektromotoren über die andere Drehdurchführung elektrisch mit dem jeweils zugeordneten Umrichter verbindbar. Ist einer der Umrichter defekt, der einem der Elektromotoren zugeordnet ist, ist dieser Elektromotor über jede der Drehdurchführungen elektrisch mit dem zur Reserve vorgesehenen Umrichter UmIII verbindbar. Sind zwei der Umrichter defekt, ist jeder der Elektromotoren über jede der Drehdurchführungen elektrisch mit einem dritten der Umrichter verbindbar. Für die Auswahl der zu verwendenden Drehdurchführung und/oder des oder der zu verwendenden Umrichter sind insbesondere geeignete Schaltelemente vorgesehen.

Aus Fig. 1e ist ein Pitchsystem gemäß einer fünften Ausführungsform der Erfindung ersichtlich, wobei drei Elektromotoren M1, M2 und M3 vorgesehen sind, die insbesondere jeweils mechanisch mit einem Rotorblatt gekoppelt sind. Bevorzugt ist jedes der Rotorblätter mittels des jeweiligen Elektromotors um eine dem jeweiligen Rotorblatt zugeordnete Blattachse drehbar. Ferner sind zwei Drehdurchführungen Se1 und Se2 sowie drei Umrichter UmI, UmII und UmIII vorgesehen, wobei jeder der Elektromotoren über jede der Drehdurchführungen elektrisch mit jedem der Umrichter verbindbar ist. Der Elektromotor M1 und der Umrichter UmI sind einander zugeordnet. Ferner sind der Elektromotor M2 und der Umrichter UmII einander zugeordnet. Schließlich sind der Elektromotor M3 und der Umrichter UmIII einander zugeordnet. Die Drehdurchführungen Se1 und Se2 sind bevorzugt jeweils als Schleifringeinheit ausgebildet. Insbesondere bilden die Drehdurchführungen eine Schleifringanordnung.

Ist eine der Drehdurchführungen defekt, ist jeder der Elektromotoren über die andere Drehdurchführung elektrisch mit dem jeweils zugeordneten Umrichter verbindbar. Ist einer der Umrichter defekt, ist der diesem zugeordnete Elektromotor über jede der Drehdurchführungen elektrisch mit einem anderen der Umrichter verbindbar. Sind zwei der Umrichter defekt, sind die diesen zugeordneten Elektromotoren über jede der Drehdurchführungen elektrisch mit einem dritten der Umrichter verbindbar. Für die Auswahl der zu verwendenden Drehdurchführung und/oder des oder der zu verwendenden Umrichter sind insbesondere geeignete Schaltelemente vorgesehen.

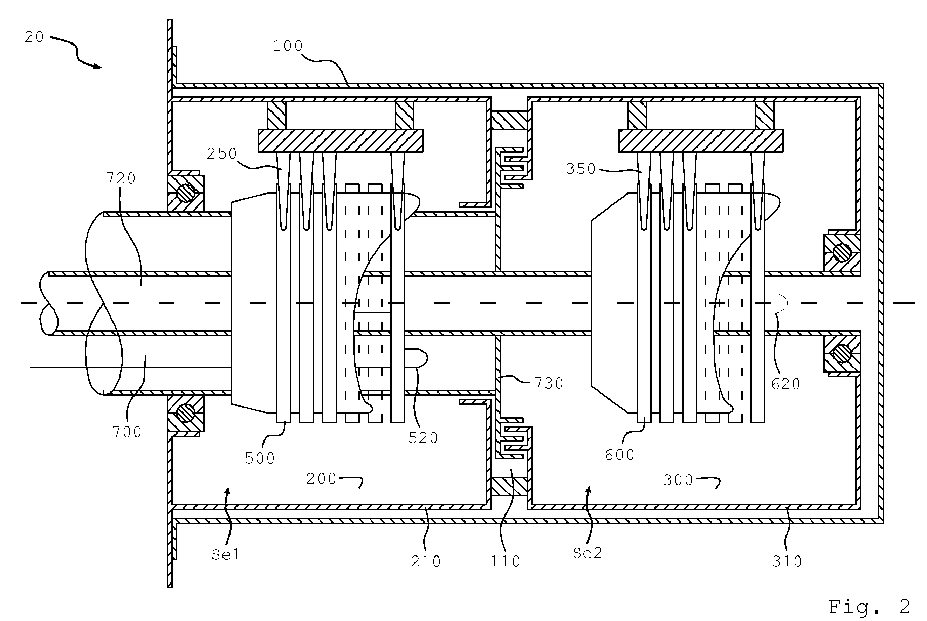

Fig. 2 zeigt in einem Längsschnitt eine erste Ausgestaltung einer zwei Schleifringeinheiten Se1 und Se2 umfassenden Schleifringanordnung 20, welche jede der aus den Fig. 1a bis 1e ersichtlichen Drehdurchführungspaare bzw.
Schleifringanordnungen bilden kann. Die Schleifringanordnung 20 ist von einem Außengehäuse 100 mit Schutzart IP-67 umschlossen, welches zur Abweisung von Wasser und Schmutz vorgesehen ist. Die Schleifringeinheit Se1 umfasst einen stationären Teil 200 mit einem Gehäuse 210, und die Schleifringeinheit Se2 umfasst einen stationären Teil 300 mit einem Gehäuse 310. Zwischen den Gehäusen 210 und 310 ist eine Lücke 110 vorgesehen, in der eine Trennwand 730 angeordnet ist, die insbesondere dazu dient, dass keine Staubpartikel aus den Schleifringeinheiten Se1 und Se2 in das Gehäuse 100 fallen können. Darüber hinaus verhindert die Trennwand 730, dass diese Partikel von dem Gehäuse 210 in das Nachbargehäuse 310 eindringen können und umgekehrt.

Der stationäre Teil 200 umfasst Kontaktarme 250, die auf Schleifringe 500 geführt sind und mit diesen im elektrischen Kontakt stehen. Die Schleifringe 500 bilden einen rotierenden Teil der ersten Schleifringeinheit Se1. Eine Leitungsverbindung 520 eines Schleifrings der Schleifringe 500 ist durch eine äußere Leitungsführung 700 geführt, die in Form einer ersten Hülse ausgebildet ist und für alle Leitungsverbindungen der Schleifringe 500 vorgesehen ist. In diesem Sinne repräsentiert die Leitungsverbindung 520 die Leitungsverbindungen der Schleifringe 500. Die Leitungsführung 700 ist mechanisch und elektrisch völlig von einer inneren Leitungsführung 720 getrennt. Ferner weisen die Schleifringeinheiten Se1 und Se2 einen unterschiedlichen Abstand zum Rotor der Windkraftanlage (nicht in Fig. 2 dargestellt) auf. Jeder elektrische Kurzschluss oder eine unzulässige Erhitzung oder ein Feuer in der Führung 700 beschädigt nicht die Leitungen in der anderen Führung 720.

Der stationäre Teil 300 umfasst Kontaktarme 350, die von dem stationären Teil 300, zu Schleifringen 600 geführt sind, und mit diesen im elektrischen Kontakt stehen. Die Schleifringe 600 bilden einen rotierenden Teil der Schleifringeinheit Se2. Eine Leitungsverbindung 620 der Schleifringeinheit 600 ist durch die innere Leitungsführung 720 hindurchgeführt, die in Form einer koaxial zu der äußeren Leitungsführung 700 angeordneten Hülse ausgebildet ist.

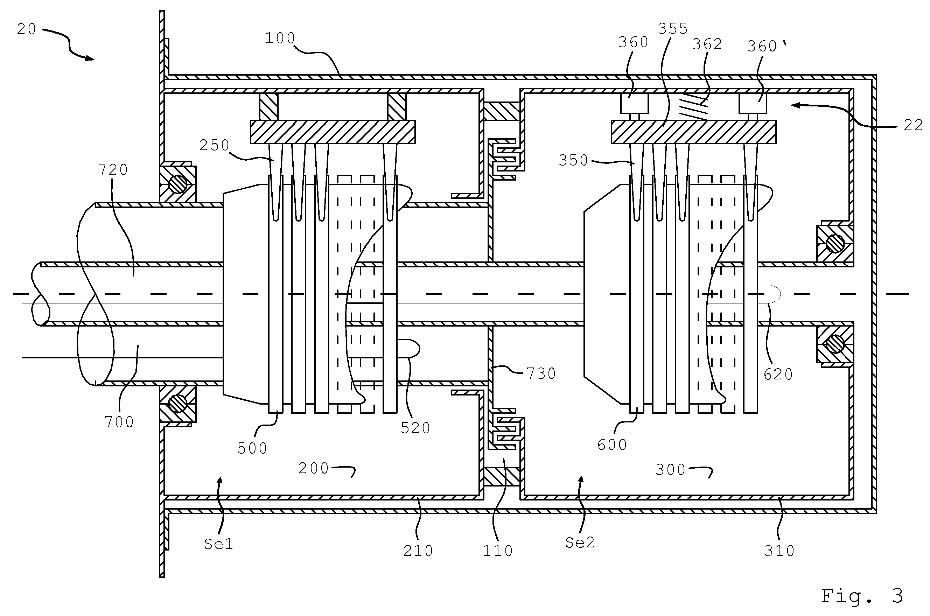

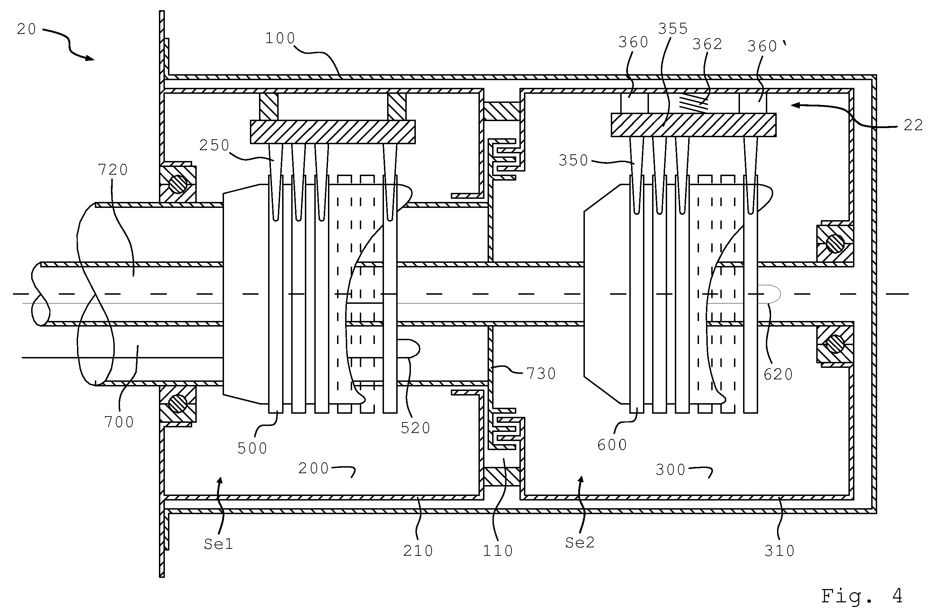

Fig. 3 und Fig. 4 zeigen eine zweite Ausgestaltung der Schleifringanordnung 20, die eine Variante der aus Fig. 2 ersichtlichen Ausgestaltung ist, wobei sich die Unterschiede lediglich auf den stationären Teil 300 der zweiten Schleifringeinheit Se2 beziehen, der zusätzlich eine magnetisch betätigte Druckreduktionseinrichtung 22 umfasst.

Die Kontaktarme 350 sind über eine Kontaktbank 355 mechanisch miteinander verbunden, wobei der stationäre Teil 300 zusätzlich zwei Elektromagnete 360 und 360' aufweist, mit denen die Kontaktbank 355 angezogen werden kann. Bei Aktivierung der Magnete (siehe Fig. 4) wird die Kontaktbank 355 nach oben angezogen, sodass der Druck zwischen den Kontaktarmen 350 und den Schleifringen 600 gelockert wird. Unter dem reduzierten Druck erhöht sich zwar der elektrische Kontaktwiderstand an den Schleifringen, die Reibung wird jedoch verringert, sodass durch die Druckreduktion die Lebensdauer der Schleifringe 600 und der Kontaktarme 350 verlängert werden kann. Bei entsprechender Dimensionierung der Magnete sind somit bei deren Aktivierung die Schleifringe in einem "Standby-Modus".

In der normalen Funktionsweise ist die zweite Schleifringeinheit Se2 bei der Druckreduktion nicht aktiv. Aus Sicherheitsgründen drückt eine Rückholeinrichtung in Form einer Spiralfeder 362 bei einem Spannungs- oder Magnetsierungsabfall die Kontaktbank 355 zurück auf den vollen Anpressdruck. Die zweite Schleifringeinheit Se2 ist somit voll aktiviert, sobald die erste Schleifringeinheit Se1 ausgefallen ist.

Zur weiteren Beschreibung der zweiten Ausgestaltung der Schleifringanordnung wird auf die Beschreibung der ersten Ausgestaltung der Schleifringanordnung verwiesen.

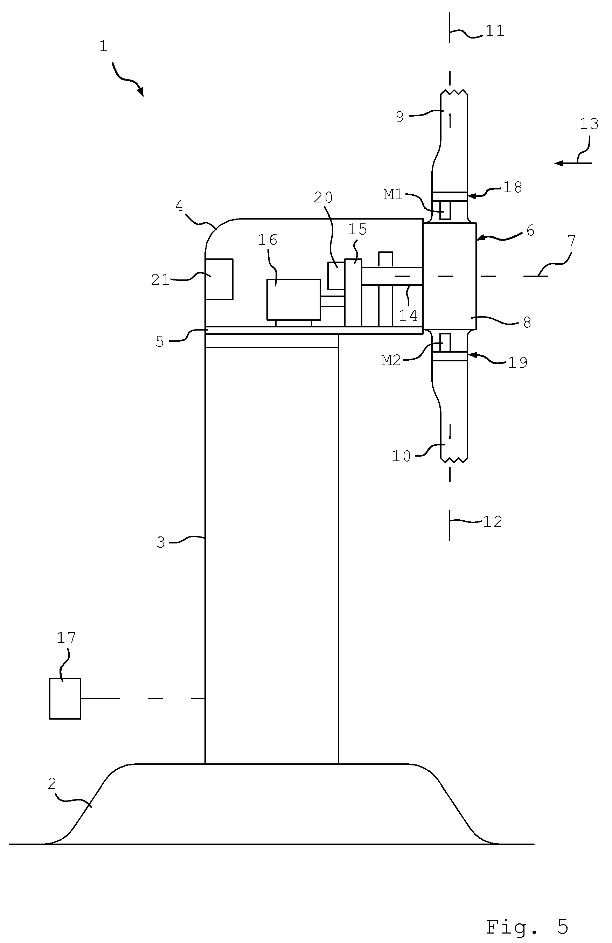

Aus Figur 5 ist in schematischer Darstellung eine Windkraftanlage 1 ersichtlich, die einen auf einem Fundament 2 aufstehenden Turm 3 umfasst, an dessen dem Fundament 2 abgewandten Ende ein Maschinenhaus 4 angeordnet ist. Das Maschinenhaus 4 weist einen Maschinenträger 5 auf, an dem ein Rotor 6 um eine Rotorachse 7 drehbar gelagert ist, der eine Rotornabe 8 und mehrere mit dieser verbundene Rotorblätter 9 und 10 umfasst, die jeweils um eine Blattachse 11 bzw. 12 drehbar an der Rotornabe 8 gelagert sind. Die Rotorblätter 9 und 10 erstrecken sich in Richtung ihrer Blattachsen 11 und 12 von der Rotornabe 8 weg, wobei die Blattachsen 11 und 12 quer zur Rotorachse 7 verlaufen. Der Rotor 6 wird durch Wind 13 um die Rotorachse 7 gedreht und umfasst eine Rotorwelle 14, die unter Zwischenschaltung eines Getriebes 15 mit einem elektrischen Generator 16 gekoppelt ist, der von dem Rotor 6 angetrieben wird. Der Generator 16 erzeugt elektrische Energie und speist diese in ein elektrisches Netz 17 ein. Die Rotorblätter 9 und 10 sind jeweils über einen Pitchantrieb 18 bzw. 19 um ihre jeweilige Blattachse relativ zu der Rotornabe 8 drehbar. Ferner kann der Rotor 6 ein drittes Rotorblatt umfassen, welches an der Rotornabe 8 um eine quer zur Rotorachse 7 verlaufende Blattachse drehbar gelagert ist, sich in Richtung dieser Blattachse von der Rotornabe 8 wegerstreckt und relativ zu der Rotornabe 8 um diese Blattachse mittels eines Pitchantriebs drehbar ist. Die Rotorblätter sind rings der Rotorachse 7 gleichmäßig verteilt angeordnet, sodass zwei benachbarte Blattachsen jeweils einen Winkel von 180° bei zwei Rotorblättern oder von 120° bei drei Rotorblättern einschließen. Jeder der Pitchantriebe umfasst wenigstens einen Umrichter und einen Elektromotor, der über eine mit der Rotorwelle 14 mechanisch gekoppelte Schleifringanordnung 20 mit dem jeweiligen Umrichter elektrisch verbunden ist, der in einer Steuereinrichtung 21 im Maschinenhaus 4 angeordnet ist. In Fig. 5 sind die Elektromotoren M1 und M2 der Pitchantriebe 18 und 19 schematisch dargestellt.

Beispielsweise ist jeder der Pitchantriebe durch einen der aus den Fig. 1a und 1b ersichtlichen Pitchantriebe gebildet. Alternativ können die Pitchantriebe aber auch ein Pitchsystem gemäß der Fig. 1c bis 1e bilden. Die Schleifringanordnung 20 umfasst insbesondere Drehdurchführungen gemäß der Fig. 1a bis 1e und bildet bevorzugt eine Schleifringanordnung gemäß Fig. 2 oder gemäß der Fig. 3 und 4.

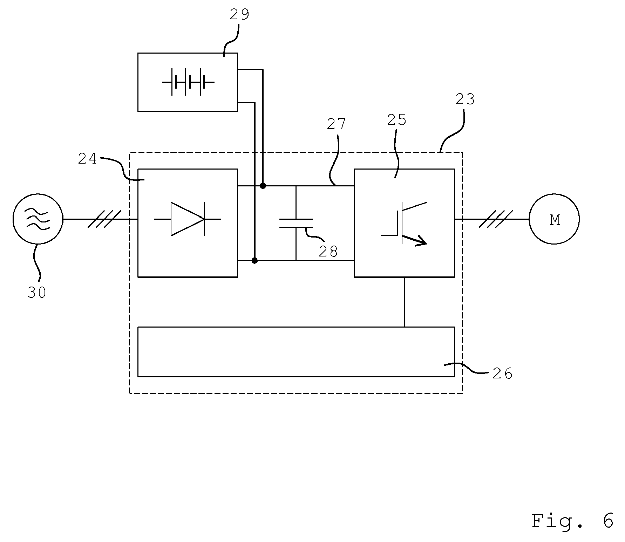

Aus Fig. 6 ist eine schematische Darstellung eines Umrichters 23 ersichtlich, durch den jeder der Umrichter gemäß der Fig. 1a bis 1e und/oder jeder der in der Beschreibung der Fig. 5 erwähnten Umrichter gebildet sein kann. Der Umrichter 23 umfasst einen Gleichrichter 24 und eine diesem nachgeschaltete Leistungssteuereinheit 25, der ein Elektromotor M nachgeschaltet ist und die mittels einer Steuerung 26 gesteuert wird. Der Gleichrichter 24 und die Leistungssteuereinheit 25 sind über einen Gleichstromzwischenkreis 27 elektrisch miteinander verbunden, der einen Zwischenkreiskondensator 28 umfasst. Ferner ist eine Notstromversorgungseinrichtung 29 elektrisch mit dem Zwischenkreis 27 verbunden. Der Gleichrichter 24 wird mittels einer Stromversorgung 30, z.B. aus einem elektrischen Netz, mit einem ein- oder mehrphasigen Wechselstrom gespeist, wandelt diesen in einen Gleichstrom um und führt diesen Gleichstrom dem Zwischenkreis 27 zu. Die Leistungssteuereinheit 25 nimmt Gleichstrom aus dem Zwischenkreis 27 auf und wandelt diesen in Abhängigkeit von der Steuerung 26 entweder in einen ein- oder mehrphasigen Wechselstrom oder in einen gepulsten Gleichstrom um und führt diesen umgewandelten Strom dem Elektromotor M zu. Ob ein ein- oder mehrphasiger Wechselstrom oder ein gepulster Gleichstrom von der Leistungssteuereinheit 25 abgegeben wird, hängt davon ab, ob der Elektromotor M ein ein- oder mehrphasiger Wechselstrommotor oder ein Gleichstrommotor ist.

Der Umrichter 23 wird insbesondere in der Windkraftanlage 1 gemäß Fig. 5 eingesetzt. Beispielsweise ist der Umrichter 23 in dem Maschinenhaus 4 angeordnet. Gemäß einer Alternative ist der Gleichrichter 24 im Maschinenhaus 4 und die Leistungssteuereinheit 25 im Rotor 6 angeordnet. In diesem Fall ist der Zwischenkreis 27 über die Schleifringanordnung 20 geführt. Die Steuerung 26 kann im Maschinenhaus 4 oder im Rotor 6 angeordnet sein. Entsprechendes gilt für die Notromversorgungseinrichtung 29.

### Bezugszeichenliste

- 1: Windkraftanlage
- 2: Fundament
- 3: Turm
- 4: Maschinenhaus
- 5: Maschinenträger
- 6: Rotor
- 7: Rotorachse
- 8: Rotornabe
- 9: Rotorblatt
- 10: Rotorblatt
- 11: Blattachse
- 12: Blattachse
- 13: Wind
- 14: Rotorwelle
- 15: Getriebe
- 16: Generator
- 17: Netz
- 18: Pitchantrieb
- 19: Pitchantrieb
- 20: Schleifringanordnung
- 21: Steuereinrichtung
- 22: Druckreduktionseinrichtung
- 23: Umrichter
- 24: Gleichrichter des Umrichters
- 25: Leistungssteuereinheit des Umrichters
- 26: Steuerung des Umrichters
- 27: Zwischenkreis des Umrichters
- 28: Zwischenkreiskondensator
- 29: Notstromversorgungseinrichtung
- 100: Außengehäuse der Schleifringanordnung
- 110: Lücke zwischen den Schleifringeinheiten
- 200: stationärer Teil der ersten Schleifringeinheit
- 210: Gehäuse der ersten Schleifringeinheit
- 250: Kontaktarme der ersten Schleifringeinheit
- 300: stationärer Teil der zweiten Schleifringeinheit
- 310: Gehäuse der zweiten Schleifringeinheit
- 350: Kontaktarme der zweiten Schleifringeinheit
- 500: Schleifringe der ersten Schleifringeinheit
- 520: Leitungsverbindungen der ersten Schleifringeinheit
- 600: Schleifringe der zweiten Schleifringeinheit
- 620: Leitungsverbindungen der zweiten Schleifringeinheit
- 700: äußere Leitungsführung
- 720: innere Leitungsführung
- 730: Trennwand zwischen den Schleifringeinheiten

- M: Elektromotor
- S: Schalter
- Se1: erste Schleifringeinheit
- Se2: zweite Schleifringeinheit
- Bl, Bl1, Bl2: Blatt
- Um, UmI, UmII, UmIII: Umrichter

## Patentansprüche

1. Windkraftanlage (1) mit einem Pitchsystem umfassend wenigstens einen jedem Rotorblatt (B1) der Anlage (1) zugeordneten elektrisch angetriebenen Pitchantrieb (18, 19) mit mindestens einem in einem rotierenden Teil (6, 14) der Anlage (1) angeordneten Elektromotor (M) zur Blattverstellung und einer dem Motor (M) zugeordneten Leistungs- und Steuereinheit (Um) mit ersten Leitungsverbindungen (520), mit denen Energie- und Steuerdaten von der Leistungs- und Steuereinheit (Um) zum Motor (M) und umgekehrt übertragbar sind, wobei die ersten Leitungsverbindungen (520) über eine ersten Drehdurchführung (Se1) geführt sind, die an einer Verbindungsstelle zwischen dem rotierenden Teil (6, 14) und einem axial anschließenden feststehenden Bereich (4) angeordnet ist, wobei das System eine zur ersten Drehdurchführung (Se1) redundante und mechanisch und elektrisch von der ersten Drehdurchführung (Se1) getrennt arbeitende, weitere Drehdurchführung (Se2) aufweist, die mit der Leistungs- und Steuereinheit (Um) und dem Motor (M) über eine weitere Leitungsverbindung (620) verbunden ist, um so bei Ausfall der ersten Drehdurchführung (Se1) eine sichere Übertragung der Energie- und Steuerdaten aufrecht zu erhalten, **dadurch gekennzeichnet, dass** die beiden Drehdurchführungen (Sei, Se2) axial hintereinander in Reihe und im Abstand zueinander angeordnet sind, wobei die erste Drehdurchführung (Sei) auf einer ersten Hülse (700) und die weitere Drehdurchführung (Se2) auf einer weiteren Hülse (720) gelagert ist, wobei die weitere Hülse (720) koaxial und teilweise innerhalb der ersten Hülse (700) angeordnet ist, so dass durch die Durchmesserdifferenz der beiden Hülsen (700, 720) ein sich radial erstreckender äußerer Ringraum zwischen den beiden Hülsen (700, 720) gebildet wird, wobei die Leitungsverbindungen (520) der ersten Drehdurchführung (Se1) durch den äußeren Ringraum und die Leitungsverbindung (620) der weiteren Drehdurchführung (Se2) durch den radialen Innenraum der weiteren Hülse (720) geführt sind.

2. Windkraftanlage nach Anspruch 1, **dadurch gekennzeichnet, dass** die Leitungsverbindungen (520, 620) zwischen dem Motor (M) und der Leistungs- und Steuereinheit (Um) über mechanisch und elektrisch getrennte Leitungsführungen (700, 720) erfolgen.

3. Windkraftanlage nach Anspruch 1 oder 2, **dadurch gekennzeichnet, dass** beide Drehdurchführungen (Se1, Se2) von einem gemeinsamen Gehäuse (100) umschlossen sind.

4. Windkraftanlage nach einem oder mehreren der vorherigen Ansprüche, **dadurch gekennzeichnet, dass** jede Drehdurchführung (Se1, Se2) jeweils eine Schleifringeinheit umfasst, bestehend aus einem Einzelgehäuse (210, 310), Schleifringen (500, 600) und auf die Ringe aufdrückbaren Kontaktarmen (250, 350) zur Übertragung der Energie- und Steuerdaten.

5. Windkraftanlage nach Anspruch 4, **dadurch gekennzeichnet, dass** die Aufdrückkraft der Kontaktarme (250, 350) einer oder beider Schleifringeinheiten (Se1, Se2) über eine Druckreduktionseinrichtung (22) auf die Schleifringe (500, 600) einstellbar ist.

6. Windkraftanlage nach Anspruch 5, **dadurch gekennzeichnet, dass** die Druckreduktionseinrichtung (22) magnetische / elektromagnetische Einrichtungen (360, 360') umfasst, die bei Fehlen eines Energie- und/oder Steuersignals einen elektrischen Kontakt bildenden bzw. elektrischen Kontakt unterbrechenden Anpressdruck ermöglichen.

7. Windkraftanlage nach Anspruch 6, **dadurch gekennzeichnet, dass** die magnetischen / elektromagnetischen Einrichtungen (360, 360') so ausgelegt sind, dass bei Spannungs- und Magnetsierungsabfall bei der Leitungsverbindung (620) zwischen dem Motor (M) und der Leistungs- und Steuereinheit (Um) ein einen elektrischen Kontakt herstellender Anpressdruck der Kontaktarme (350) hergestellt wird.

8. Windkraftanlage nach einem oder mehreren der vorherigen Ansprüche, dadurch gekennzeicht, dass der Pitchantrieb (18, 19) im rotierenden Teil nur einen Elektromotor (M) aufweist und die zugehörige Leistungs- und Steuereinheit (Um) mit anderen Komponenten des Antriebes im feststehenden Bereich (4) angeordnet sind, wobei über eine Schalteinrichtung (S) die zughörige Leistungs- und Steuereinheit (Um) mit einer von beiden Drehdurchführungen (Se1, Se2) verbunden ist.

9. Windkraftanlage nach einem oder mehreren der vorherigen Ansprüche, **dadurch gekennzeichnet, dass** jeder Leistungs- und Steuereinheit (UmI) mindestens eine weitere Leistungs- und Steuereinheit (UmII) zugeordnet ist, die bei Ausfall der ersten Leistungs- und Steuereinheit schaltbar mit dem zugehörigen Motor (M) der ersten Leistungs- und Steuereinheit (UmI) verbunden ist.

10. Windkraftanlage nach einem oder mehreren der vorherigen Ansprüche, **dadurch gekennzeichnet, dass** drei Motoren (M1, M2, M3) und drei Leistungs- und Steuereinheiten (UmI, UmII, UmIII) vorgesehen sind, deren Leitungsverbindungen (520) über die erste Drehdurchführung (Se1) geführt sind und weitere drei unabhängig arbeitende Leistungs- und Steuereinheiten vorgesehen sind, deren Leitungsverbindungen (620) über die zweite Drehdurchführung (Se2) geführt sind und schaltbar mit jedem der drei Motoren (M1, M2, M3) verbunden sind.

11. Windkraftanlage nach Anspruch 9 oder 10, **dadurch gekennzeichnet, dass** die Leistungs- und Steuereinheiten (UmI, UmII, UmIII) jeweils als Umrichter ausgebildet sind.

## Claims

1. Wind power plant (1) with a pitch system encompassing at last one electrically driven pitch drive (18, 19) assigned to each rotor blade (B1) of the plant (1) with at least one electric motor (M) arranged inside a rotating part (6, 14) of the plant (1) for blade adjustment and a power and a control unit (Um) assigned to the motor (M) with first cable connections (520) allowing power and control data to be transferred from the power and control unit (Um) to the motor (M) and vice versa, whereby the cable connections (520) are guided through a first rotary feedthrough (Se1) which is arranged at a connection point between the rotating part (6, 14) and an axially adjacent fixed section (4), whereby the system has a second rotary feedthrough (Se2) which is redundant to the first rotary feedthrough (Se1) and operates mechanically and electrically separately from it, and which is connected to the power and control unit (Um) and the motor (M) over second cable connections (620), in order to maintain reliable transmission of power and control data in the event of failure of the first rotary feedthrough (Se1), **characterized in that** the two rotary feedthroughs (Se1, Se2) are arranged axially at a distance one behind the other in series, whereby the first rotary feedthrough (Se1) is mounted on a first sleeve (700) and the second rotary feedthrough (Se2) on a second sleeve (720), whereby the second sleeve (720) is arranged coaxially and partially inside the first sleeve (700) so that a radially extending ring-shaped external space is formed by the diameter difference between the two sleeves (700, 720), whereby the cable connections (520) of the first rotary feedthrough (Se1) are guided through the outer ring-shaped space and the cable connections (620) of the second rotary feedthrough (Se2) through the internal radial space of the second sleeve (720).

2. Wind power plant in accordance with claim 1, **characterized in that** the cable connections (520, 620) between the motor (M) and the power and control unit (Um) take place using mechanically and electrically separate cable guides (700, 720).

3. Wind power plant in accordance with claims 1 or 2, **characterized in that** both rotary feedthroughs (Se1, Se2) are encompassed by a common housing (100).

4. Wind power plant in accordance with one or more of the above claims, **characterized in that** each rotary feedthrough (Se1, Se2) encompasses a slip ring unit, comprising a single housing (210, 310), slip rings (500, 600) and contact arms (250, 350) which can be pressed onto the rings to transfer energy and control data.

5. Wind power plant in accordance with claim 4, **characterized in that** the press-on force of the contact arms (250, 350) of one or both slip ring units (Se1, Se2) can be adjusted to the slip rings (500, 600) by means of a pressure reducing device (22).

6. Wind power plant in accordance with claim 5, **characterized in that** the pressure reducing device (22) encompasses magnetic/electromagnetic fixtures (360, 360') which in the event of a failure of the power and/or control signal form an electrical contact / allow a contact pressure which interrupts the electrical contact.

7. Wind power plant in accordance with claim 6, **characterized in that** the magnetic / electromagnetic fixtures (360/360') are configured in such a way as to create a contact pressure acting on the contact arms (350) which generates an electrical contact in the event of a voltage and magnetization drop in the cable connection (620) between the motor (M) and the power and control unit (Um).

8. Wind power plant in accordance with one or more of the above claims **characterized in that** the pitch drive (18, 19) in the rotary section has only one electric motor (M) and the relevant power and control unit (Um) together with other components of the drive are arranged in the fixed section (4), whereby the relevant power and control unit (Um) is connected to one of the two rotary feedthroughs (Se1, Se2) via a switching device (S).

9. Wind power plant in accordance with one or more of the above claims **characterized in that** at least one other power and control unit (Um II) is assigned to each power and control unit (Um I), which can be switchably connected to the relevant motor (M) of the first power and control unit (UM I) in the event of failure of the first power and control unit.

10. Wind power plant in accordance with one or more of the above claims **characterized in that** three motors (M1, M2, M3) and three power and control units (Um I, Um II, UM III) are provided whose cable connections (520) are guided via the first rotary feedthrough (Se1) and three additional independently operating power and control units are provided whose cable connections (620) are guided via the second rotary feedthrough (Se2) and are switchably connected to each of the three motors (M1, M2, M3).

11. Wind power plant in accordance with claim 9 or 10 **characterized in that** the power and control units (Um I, Um II, UM III) are each configured as converters.

## Revendications

1. Éolienne (1) avec un système de réglage de pales comportant au moins un entraînement pitch (18, 19) à commande électrique attribué à chaque pale de rotor (B1) de l'éolienne (1), avec au moins un moteur électrique (M) placé dans une partie rotative (6, 14) de l'éolienne (1), pour le réglage des pales, et une unité de puissance et de commande (Um) attribuée au moteur (M), avec de premiers raccordements de câbles (520) avec lesquels les données d'énergie et de commande sont transmissibles de l'unité de puissance et de commande (Um) au moteur (M) et inversement, les raccordements de câbles (520) étant guidés par l'intermédiaire d'un premier joint tournant (Se1) qui est placé en un point de raccordement entre la partie rotative (6, 14) et une zone fixe à raccordement axial (4), le système présentant un autre joint tournant (Se2) redondant par rapport au premier joint tournant (Se1) et fonctionnant séparé mécaniquement et électriquement du premier joint tournant (Se1), qui est relié à l'unité de puissance et de commande (Um) et au moteur (M) par l'intermédiaire de deuxièmes raccordements de câbles (620) pour ainsi, en cas de défaillance du premier joint tournant (Se1), maintenir une transmission sûre des données d'énergie et de commande, **caractérisée en ce que** les deux joints tournants (Se1, Se2) sont alignés axialement l'un derrière l'autre et écartés l'un par rapport à l'autre, le premier joint tournant (Se1) étant monté sur une première douille (700) et l'autre joint tournant (Se2) sur une autre douille (720), l'autre douille (720) étant placée coaxialement et en partie à l'intérieur de la première douille (700), de sorte qu'il se forme, par la différence de diamètre des deux douilles (700, 720), une zone circulaire extérieure s'étendant radialement entre les deux douilles (700, 720), les raccordements de câbles (520) du premier joint tournant (Se1) étant guidés par la zone circulaire extérieure et les raccordements de câbles (620) de l'autre joint tournant (Se2) étant guidés par la zone intérieure radiale de l'autre douille (720).

2. Éolienne selon revendication 1, **caractérisée en ce que** les raccordements de câbles (520, 620) entre le moteur (M) et l'unité de puissance et de commande (Um) s'effectuent par l'intermédiaire de passages de câbles séparés mécaniquement et électriquement (700, 720).

3. Éolienne selon revendication 1 ou 2, **caractérisée en ce que** les deux joints tournants (Se1, Se2) sont entourés par un boîtier commun (100).

4. Éolienne selon une ou plusieurs des revendications précédentes, **caractérisée en ce que** chaque joint tournant (Se1, Se2) comporte une unité de collecteurs composée d'un boîtier individuel (210, 310), de collecteurs (500, 600) et de bras de contact (250, 350) pouvant s'appuyer sur les collecteurs pour la transmission des données d'énergie et de commande.

5. Éolienne selon revendication 4, **caractérisée en ce que** la force d'appui des bras de contact (250, 350) d'une ou des deux unités de collecteurs (Se1, Se2) est réglable par l'intermédiaire d'un dispositif de réduction de pression (22) sur les collecteurs (500, 600).

6. Éolienne selon revendication 5, **caractérisée en ce que** le dispositif de réduction de pression (22) comporte des dispositifs magnétiques / électromagnétiques (360, 360') qui, en l'absence d'un signal d'énergie et/ou de commande, permettent une pression d'appui formant contact électrique ou coupant le contact électrique.

7. Éolienne selon revendication 6, **caractérisée en ce que** les dispositifs magnétiques / électromagnétiques (360, 360') sont conçus de sorte que, en cas de chute de tension et de magnétisation au niveau du raccordement de câbles (620) entre le moteur (M) et l'unité de puissance et de commande (Um), une pression d'appui des bras de contact (350) établissant un contact électrique s'établisse.

8. Éolienne selon une ou plusieurs des revendications précédentes, **caractérisée en ce que** l'entraînement pitch (18, 19) ne présente dans la partie rotative qu'un moteur électrique (M) et que l'unité de puissance et de commande (Um) qui s'y rapporte est placée avec d'autres composants de l'entraînement dans la zone fixe (4), l'unité de puissance et de commande (Um) qui s'y rapporte étant reliée par l'intermédiaire d'un dispositif de commutation (S) à l'un des deux joints tournants (Se1, Se2).

9. Éolienne selon une ou plusieurs des revendications précédentes, **caractérisée en ce que**, à chaque unité de puissance et de commande (Uml) est attribuée au moins une autre unité de puissance et de commande (UmII) qui, en cas de défaillance de la première unité de puissance et de commande, est reliée de façon commutable au moteur (M) correspondant de la première unité de puissance et de commande (Uml).

10. Éolienne selon une ou plusieurs des revendications précédentes, **caractérisée en ce qu'**il est prévu trois moteurs (M1, M2, M3) et trois unités de puissance et de commande (Uml, Umll, UmIII) dont les raccordements de câbles (520) sont guidés par l'intermédiaire du premier joint tournant (Se1), et trois autres unités de puissance et de commande fonctionnant séparément, dont les raccordements de câbles (620) sont guidés par l'intermédiaire du deuxième joint tournant (Se2) et reliés commutables à chacun des trois moteurs (M1, M2, M3).

11. Éolienne selon revendication 9 ou 10, **caractérisée en ce que** les unités de puissance et de commande (Uml, Umll, UmIII) sont chacune configurées en tant que convertisseurs.
